# EUROPÄISCHE PATENTSCHRIFT

(11) **EP 2 746 091 B1**
(45) Veröffentlichungstag und Bekanntmachung des Hinweises auf die Patenterteilung: **16.09.2015**
(21) Anmeldenummer: 13191123.2
(22) Anmeldetag: 31.10.2013
(51) Int. Cl.: B60L 5/20

(54) **Gleitkontaktvorrichtung**
Floating contact device
Dispositif de contact à glissement

(30) Priorität: 21.12.2012 DE 102012224254
(43) Veröffentlichungstag der Anmeldung: 25.06.2014
(73) Patentinhaber: Hoffmann & Co Elektrokohle AG, 4822 Bad Goisern (AT)
(72) Erfinder: Rastl, Hans, 4822 Bad Goisern (AT); Gadocha, Siegfried, 5360 St. Wolfgang (AT)
(74) Vertreter: advotec.

(56) Entgegenhaltungen:
- EP-A1- 1 527 942
- DE-A1- 4 343 489
- DE-U1- 9 401 585

## Beschreibung

Die vorliegende Erfindung betrifft eine Gleitkontaktvorrichtung, insbesondere für eine Stromversorgung von Fahrzeugen über einen Fahrdraht, wobei die Gleitkontaktvorrichtung eine Schleifleistenträgereinrichtung, eine daran angeordnete Schleifleiste sowie eine Strömungsleiteinrichtung umfasst.

Zur Stromversorgung von schienengebundenen, aber auch von nicht schienengebundenen, mit Elektromotoren betriebenen Fahrzeugen werden Gleitkontakteinrichtungen verwendet, die eine Schleifleiste, eine Schleifleistenträgereinrichtung und zuweilen auch eine Strömungsleiteinrichtung umfassen. Diese Gleitkontaktvorrichtung wird üblicherweise auf einer Andruckvorrichtung, welche fachterminologisch auch als "Pantograph" bezeichnet wird, angebracht. Der Pantograph drückt die als Verschleißteil ausgeführte Schleifleiste mittels einer Vorspannkraft gegen einen Fahrstromleiter (Fahrdraht), wodurch ein Gleitkontakt ausgebildet und eine Stromversorgung des Fahrzeuges während der Fahrt ermöglicht wird.

Um auch während des dynamischen Fahrbetriebs von derartigen Fahrzeugen eine möglichst kontinuierliche Aufrechterhaltung des Gleitkontakts zwischen der Schleifleiste und dem Fahrdraht zu ermöglichen, ist es bekanntermaßen von Vorteil, die Andruckkraft der Schleifleiste gegen den Fahrdraht mittels aerodynamischer Vorrichtungen zu erhöhen. Die DE 1 272 958 offenbart zu diesem Zweck eine Gleitkontaktvorrichtung mit Leitflächen zur Erzielung eines Auftriebs durch den Fahrtwind. Allerdings kann auch dadurch kein ununterbrochenener Kontakt zwischen der Schleifleiste und dem Fahrdraht sichergestellt werden. Insbesondere bei Bildung von Reif, Raureif oder sonstigen eisigen Anhaftungen am Fahrdraht sind kurzzeitige Ablösungen der Schleifleiste vom Fahrdraht unvermeidlich. Unter anderem bedingt durch diese Ablösungen ist regelmäßig ein elektrischer Überschlag, bzw. die Bildung eines Lichtbogens zwischen dem Fahrdraht und der Schleifleistenträgereinrichtung zu beobachten, welcher oftmals eine Beschädigung der Gleitkontaktvorrichtung nach sich zieht. Vor allem die in der Regel aus Aluminium ausgeführte Schleifleistenträgereinrichtung kann dabei stark beschädigt werden, wodurch erhöhte Inspektions- und Austauschintervalle nötig sind.

Ein weiterer Faktor, welcher einen solchen elektrischen Überschlag, bzw. die Bildung eines Lichtbogens begünstigt, ist eine erhöhte Luftfeuchtigkeit im Bereich zwischen dem Fahrdraht und der Schleifleistenträgereinrichtung, unter anderem bedingt durch das Verdampfen von Wasser, bzw. eisigen Anhaftungen am Fahrdraht, oder Niederschlag aufgrund hoher Temperaturen der Schleifleiste.

Im Stand der Technik sind ausschließlich solche Strömungsleitleiteinrichtungen bekannt, die zur aerodynamischen Erzeugung von Auftriebskräften dienen, um eine größere Andruckkraft der Schleifleiste gegen den Fahrdraht zu erzielen. Oftmals wird dadurch jedoch ein Luftstrom erzeugt, welcher der Ausbildung eines elektrischen Überschlags, bzw. der Bildung eines Lichtbogens noch begünstigen kann.

Die DE 4343489 offenbart eine Gleitkontaktvorrichtung nach dem Oberbegriff des Anspruchs 1.

Der vorliegenden Erfindung liegt daher die Aufgabe zugrunde, eine Gleitkontakteinrichtung vorzuschlagen, welche einem elektrischen Überschlag sowie der Bildung eines Lichtbogens zwischen dem Fahrdraht und der Schleifleistenträgereinrichtung entgegenwirkt.

Zur Lösung dieser Aufgabe weist die erfindungsgemäße Gleitkontaktvorrichtung die Merkmale des Anspruchs 1 auf.

Bei der erfindungsgemäßen Gleitkontakteinrichtung wird mittels der Relativanordnung der Schleifleistenträgereinrichtung und der Strömungsleiteinrichtung zwischen diesen beiden Bauteilen ein Kanal ausgebildet, durch welchen im Gegensatz zum Stand der Technik, eine gezielte Führung eines Luftstroms ermöglicht wird.

Durch eine solch aerodynamisch vorteilhafte Bauform der Gleitkontakteinrichtung, wird als ein positiver Effekt unter anderem einem elektrischen Überschlag sowie der Bildung eines Lichtbogens zwischen dem Fahrdraht und der Schleifleistenträgereinrichtung entgegenwirkt.

Eine derart ausgebildete Gleitkontakteinrichtung lässt sich grundsätzlich in drei funktionale Einrichtungen untergliedern. Zum einen die meist größtenteils aus Kohlenstoff gefertigte Schleifleiste, welche direkt am Fahrdraht anliegt. Zum anderen die meist aus Aluminium oder einem anderen geeigneten Material gefertigte Schleifleistenträgereinrichtung, welche als Aufnahme für die Schleifleiste und zur Befestigung auf dem Pantograph dient und zum Dritten die Strömungsleiteinrichtung, welche erfindungsgemäß durch ihre relative Anordnung zur Schleifleistenträgereinrichtung zusammen mit dieser einen Strömungskanal ausbildet. Der so gebildete Strömungskanal kann durch eine Anströmung entlang einer Fahrtrichtung, hauptsächlich aufgrund des auftretenden Fahrtwindes, von Luft durchströmt werden.

Aufgrund der erfindungsgemäßen Ausgestaltung der Gleitkontaktvorrichtung kann ein elektrischer Überschlag, bzw. die Bildung eines Lichtbogens zwischen dem Fahrdraht und der Schleifleistenträgereinrichtung durch eine gezielte Führung eines Luftstromes weitestgehend bis vollständig vermieden werden. Zum einen wird die sich hinter der Schleifleistenträgereinrichtung bildende Region erhöhter Luftfeuchtigkeit durch den Luftstrom mit einer geringeren Luftfeuchtigkeit aufgelöst und dadurch die Wahrscheinlichkeit eines elektrischen Überschlags, bzw. der Bildung eines Lichtbogens entgegengewirkt. Zum anderen ist darüberhinaus die Bildung des elektrischen Überschlags, bzw. des Lichtbogens auch durch einen Luftstrom beeinflussbar. Durch eine gezielte Lenkung bzw. Verwirbelung des aus dem Kanal austretenden Luftstromes, kann somit die Wahrscheinlichkeit der Entstehung eines elektrischen Überschlags, bzw. der Bildung eines Lichtbogens weiter reduziert bzw. ausgeräumt werden. Sollte sich dennoch ein Lichtbogen ausbilden, so wird dieser durch die erzeugte Luftströmung derart beeinflusst, dass er rasch wieder verschwindet, ehe ein Schaden an der Gleitkontaktvorrichtung entstehen kann.

Die Strömungsleiteinrichtung kann einstückig ausgebildet sein, vorzugsweise aber auch mehrere Teilstücke aufweisen.

Diese Teilstücke können an nahezu beliebiger Stelle um die Schleifleistenträgereinrichtung angeordnet sein, wobei auch eine Positionierung mehrer Teilstücke an unterschiedlichen Seiten der Schleifleistenträgereinrichtung möglich ist.

So sind beispielsweise Ausführungsformen denkbar, welche eine Anordnung zumindest jeweils eines Teilstückes an einer der Fahrtrichtung zugewandten Seite der Schleifleistenträgereinrichtung, oder aber an einer der Fahrtrichtung abgewandten Seite der Schleifleistenträgereinrichtung, oder aber an einer dem Fahrdraht abgewandten Seite der Schleifleistenträgereinrichtung vorsehen.

Darüberhinaus sind auch noch weitere Kombinationen dieser Varianten denkbar. Beispielsweise eine Anordnung zumindest jeweils eines Teilstückes der Strömungsleiteinrichtung an einer der Fahrtrichtung zugewandten und einer der Fahrtrichtung abgewandten Seite der Schleifleistenträgereinrichtung.

Zusätzlich, oder nur für sich, ist ein Teilstück an einer dem Fahrdraht abgewandten Seite der Schleifleistenträgereinrichtung denkbar.

Die Teilstücke der Strömungsleiteinrichtung können getrennt voneinander, oder teilweise, oder zur Ausbildung einer zusammenhängenden Einheit miteinander verbunden sein.

Sie können durch nahezu beliebige geometrische Körper, wie z.B. Rechtecke, Dreiecke aber auch sonstige Polygone oder runde Formen, bzw. Kombinationen davon gebildet werden, um die gewünschte Luftströmung zu erzielen.

Der so gebildete Kanal kann durchgängig sein, oder aber in mehrere Abschnitte oder Teilkanäle aufgeteilt, bzw. untergliedert sein und sich eventuell verzweigen. Seine geometrische Form kann den Erfordernissen beliebig angepasst werden und verschiedensten Ausführungsformen entsprechen.

Seine Querschnittsfläche kann in seinem Verlauf konstant bleiben, oder sich beliebig oft verjüngen und erweitern.

Die die Kanalwandung bildenden Bauteile, also vornehmlich die Strömungsleiteinrichtung sowie die Schleifleistenträgereinrichtung können fest angeordnet, oder in einer besonders vorteilhaften Ausführungsform variabel und verstellbar sein. Eine Verstellung könnte dabei manuell oder automatisiert erfolgen. Auch eine Geschwindigkeits-, Wind-, oder von sonstigen Faktoren abhängige automatisierte Regelung und Steuerung ist denkbar.

Eine andere besonders vorteilhafte Ausführungsform der Erfindung entsteht durch die Zusammenführung der Schleifleistenträgereinrichtung und der Strömungsleiteinrichtung zu einer baulich konstruktiven Einheit, wobei die Strömungsleiteinrichtung einen integralen Bestandteil der Schleifleistenträgereinrichtung bildet und diese Einheit eine oder mehrere Materialausnehmungen aufweisen kann, welche in Fahrtrichtung oder in einer anderen Art und Weise durchgängig sein können. Der Kanal bzw. die Kanäle können als eine nahezu beliebige geometrische Form und mit einem nahezu beliebigen Verlauf ausgestaltet werden.

Zudem können weitere Teilstücke der Strömungsleiteinrichtung an dieser Ausführungsform vorgesehen sein.

Bei sämtlichen Ausführungsformen der Erfindung können vor, hinter, oder in den Kanälen weitere Strömungsleiteinrichtungen oder sonstige Bauteile vorgesehen sein, um eine Strömung, bzw. Lenkung des Luftstromes vorteilhaft zu beeinflussen.

Die durch die Gleitkontaktvorrichtung erzeugte Luftströmung, kann je nach Ausführungsform laminar oder turbulent sein. Nach dem Kanalauslass kann eine Verwirbelung des Luftstromes stattfinden oder aber ein gerichteter Luftstrahl erzeugt werden. Zur Konzentration des Luftstrahls kann eine Düse eingesetzt werden.

Beispielhaft werden im Folgenden drei mögliche Ausführungsformen anhand der Zeichnung weiter verdeutlicht.

Es zeigen:
- **Fig**. **1:**: Eine Querschnittsdarstellung einer Gleitkontaktvorrichtung gemäß einer ersten Ausführungsform mit einer einstückig ausgeführten Strömungsleiteinrichtung;
- **Fig**. **2:**: eine Querschnittsdarstellung einer Gleitkontaktvorrichtung gemäß einer zweiten Ausführungsform mit einer mehrteilig ausgeführten Strömungsleiteinrichtung;

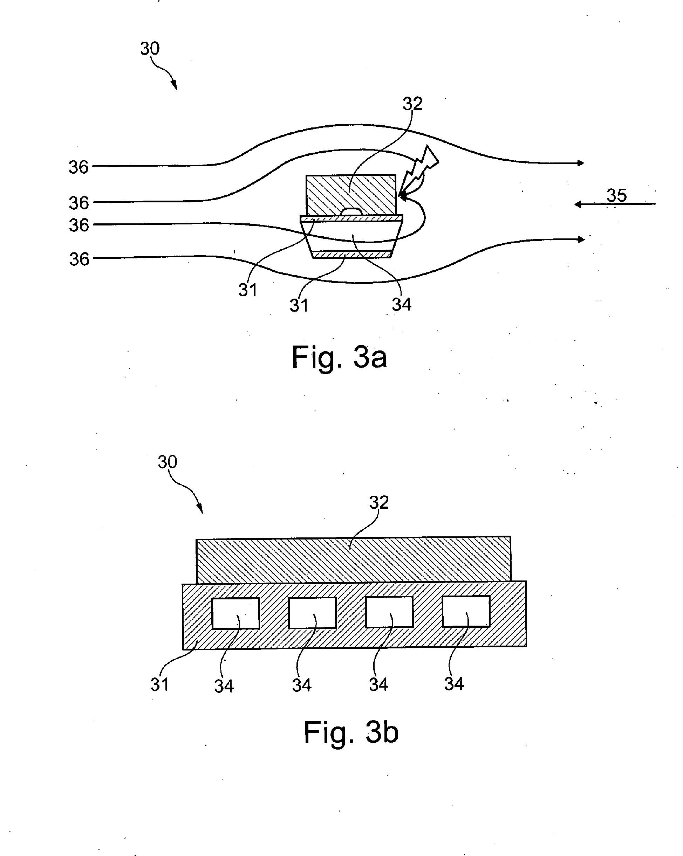

- **Fig. 3a:**: eine Querschnittsdarstellung einer Gleitkontaktvorrichtung gemäß einer dritten Ausführungsform mit einer als Strömungsleiteinrichtung ausgebildeten Schleifleistenträgereinrichtung;
- **Fig. 3b:**: zeigt eine Darstellung einer Gleitkontaktvorrichtung gemäß Fig. 3a in einer Ansicht entlang der Fahrtrichtung.

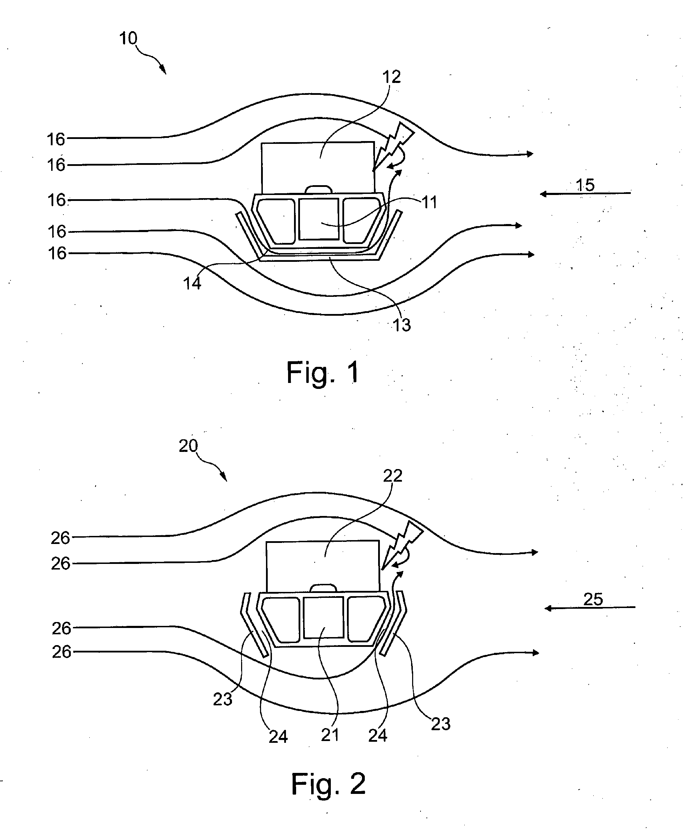

**Fig. 1** zeigt eine Querschnittsdarstellung einer Gleitkontaktvorrichtung 10, umfassend eine Schleifleistenträgereinrichtung 11, eine Schleifleiste 12 und eine einstückig ausgeführte Strömungsleiteinrichtung 13. Zwischen der Schleifleistenträgereinrichtung 11 und der Strömungsleiteinrichtung 13 wird ein Kanal 14 gebildet, welcher bei einer Bewegung der Gleitkontaktvorrichtung 10 in einer Fahrtrichtung 15 von Luft 16 durchströmt wird.

**Fig. 2** zeigt eine Querschnittsdarstellung einer Gleitkontaktvorrichtung 20, umfassend eine Schleifleistenträgereinrichtung 21, eine Schleifleiste 22 und eine mehrteilig ausgeführte Strömungsleiteinrichtung 23, wobei ein Teilstück der Strömungsleiteinrichtung 23 auf einer der Fahrtrichtung 25 zugewandten Seite der Schleifleistenträgereinrichtung 21 und ein weiteres Teilstück der Strömungsleiteinrichtung 23 einer der Fahrtrichtung 25 abgewandten Seite der Schleifleistenträgereinrichtung 21 angeordnet ist. Zwischen der Schleifleistenträgereinrichtung 21 und den beiden Teilstücken der Strömungsleiteinrichtung 23 werden zwei Kanalabschnitte 24 gebildet, welche bei einer Bewegung der Gleitkontaktvorrichtung 20 in einer Fahrtrichtung 25 von Luft 26 durchströmt wird.

**Fig. 3a** zeigt eine Querschnittsdarstellung einer Gleitkontaktvorrichtung 30, umfassend eine Schleifleiste 32 sowie eine als Strömungsleiteinrichtung ausgebildete Schleifleistenträgereinrichtung 31 die bei der dargestellten Ausführungsform durch mehrere parallel nebeneinander angeordnete Materialausnehmungen 34 gebildet wird, welche in Fahrtrichtung durchgängig sind und somit Kanäle bilden, welche bei einer Bewegung der Gleitkontaktvorrichtung 30 in einer Fahrtrichtung 35 von Luft 36 durchströmt werden.

**Fig. 3b** zeigt die Gleitkontaktvorrichtung 30 gemäß Fig. 3a, aus einer Ansicht entlang der Fahrtrichtung 35, umfassend eine Schleifleiste 32, sowie eine als Strömungsleiteinrichtung ausgebildete Schleifleistenträgereinrichtung 31 die bei der dargestellten Ausführungsform durch mehrere parallel nebeneinander angeordnete Materialausnehmungen 34 gebildet wird, welche in Fahrtrichtung durchgängig sind und somit Kanäle bilden, welche bei einer Bewegung der Gleitkontaktvorrichtung 30 in einer Fahrtrichtung 35 von Luft durchströmt werden.

## Patentansprüche

1. Gleitkontaktvorrichtung (10, 20, 30), insbesondere für eine Stromversorgung von Fahrzeugen über einen Fahrdraht, wobei die Gleitkontaktvorrichtung (10, 20, 30) eine Schleifleistenträgereinrichtung (11, 21, 31), eine daran angeordnete Schleifleiste (12, 22, 32) sowie eine Strömungsleiteinrichtung (13, 23, 33) umfasst,
**dadurch gekennzeichnet,**
**dass** die Schleifleistenträgereinrichtung (11, 21, 31) und die Strömungsleiteinrichtung (13, 23, 33) derart zueinander angeordnet sind, dass zwischen ihnen ein Kanal (14, 24, 34) ausgebildet ist, welcher durch eine Anströmung entlang einer Fahrtrichtung (15, 25, 35) von Luft (16, 26, 36) durchströmt werden kann.

2. Gleitkontaktvorrichtung (10, 20) nach Anspruch 1,
**dadurch gekennzeichnet,**
**dass** die Strömungsleiteinrichtung (13, 23) mehrere Teilstücke aufweist.

3. Gleitkontaktvorrichtung (10, 20) nach Anspruch 1 oder 2,
**dadurch gekennzeichnet,**
**dass** die Strömungsleiteinrichtung (13, 23) zumindest teilweise auf einer der Fahrtrichtung (15, 25) zugewandten Seite der Schleifleistenträgereinrichtung (11, 21) angeordnet ist.

4. Gleitkontaktvorrichtung (10, 20) nach einem der vorangehenden Ansprüche,
**dadurch gekennzeichnet,**
**dass** die Strömungsleiteinrichtung (13, 23) zumindest teilweise auf einer der Fahrtrichtung (15, 25) abgewandten Seite der Schleifleis-. tenträgereinrichtung (11, 21) angeordnet ist.

5. Gleitkontaktvorrichtung (10) nach einem der vorangehenden Ansprüche **dadurch gekennzeichnet,**
**dass** die Strömungsleiteinrichtung (13) zumindest teilweise auf einer der Schleifleiste (12) abgewandten Seite der Schleifleistenträgereinrichtung (11) angeordnet ist.

6. Gleitkontaktvorrichtung (10, 20) nach einem der vorangehenden Ansprüche,
**dadurch gekennzeichnet,**
**dass** zumindest ein Teilstück der Strömungsleiteinrichtung (13, 23) auf einer der Fahrtrichtung (15, 25) zugewandten Seite der Schleifleistenträgereinrichtung (11, 21) und zumindest ein weiteres Teilstück der Strömungsleiteinrichtung (13, 23) einer der Fahrtrichtung (15, 25) abgewandten Seite der Schleifleistenträgereinrichtung (11, 21) angeordnet ist.

7. Gleitkontaktvorrichtung (10) nach einem der vorangehenden Ansprüche,
**dadurch gekennzeichnet,**
**dass** zumindest ein Teilstück der Strömungsleiteinrichtung (13) auf einer der Fahrtrichtung (15) zugewandten Seite der Schleifleistenträgereinrichtung (11) und zumindest ein weiteres Teilstück der Strömungsleiteinrichtung (13) einer der Fahrtrichtung (15) abgewandten Seite der Schleifleistenträgereinrichtung (11) und zumindest noch ein weiteres Teilstück der Strömungsleiteinrichtung (13) einer der Schleifleiste (12) abgewandten Seite der Schleifleistenträgereinrichtung (11) angeordnet ist.

8. Gleitkontaktvorrichtung (10, 20, 30) nach einem der vorangehenden Ansprüche,
**dadurch gekennzeichnet,**
**dass** die Teilstücke der Strömungsleiteinrichtung (13, 23, 33) miteinander verbunden sind.

9. Gleitkontaktvorrichtung (10, 20, 30) nach einem der vorangehenden Ansprüche,
**dadurch gekennzeichnet,**
**dass** der Kanal (14, 24, 34) in mehrere Teilkanäle unterteilt ist.

10. Gleitkontaktvorrichtung (10, 20, 30) nach einem der vorangehenden Ansprüche,
**dadurch gekennzeichnet,**
**dass** sich ein Querschnitt des Kanals (14, 24, 34) in einer Richtung verjüngt.

11. Gleitkontaktvorrichtung (10, 20) nach einem der vorangehenden Ansprüche,
**dadurch gekennzeichnet,**
**dass** die Strömungsleiteinrichtung (13, 23) verstellbar ausgeführt ist.

12. Gleitkontaktvorrichtung (30) nach einem der vorangehenden Ansprüche,
**dadurch gekennzeichnet,**
**dass** die Strömungsleiteinrichtung einen integralen Bestandteil der Schleifleistenträgereinrichtung (31) bildet.

13. Gleitkontaktvorrichtung (30) nach Anspruch 12,
**dadurch gekennzeichnet,**
**dass** die Schleifleistenträgereinrichtung (31) als Strömungsleiteinrichtung ausgebildet ist, derart, dass zumindest ein Kanal (34) mittels in Fahrtrichtung (35) durchgängiger Materialausnehmungen innerhalb dieser Schleifleistenträgereinrichtung (31) gebildet wird.

14. Gleitkontaktvorrichtung (30) nach Anspruch 12 oder 13,
**dadurch gekennzeichnet,**
**dass** die Gleitkontaktvorrichtung (30) darüber hinaus zumindest ein weiteres Teilstück der Strömungsleiteinrichtung umfasst.

## Claims

1. A sliding contact device (10, 20, 30), in particular for supplying power to vehicles via an overhead wire, the sliding contact device (10, 20, 30) comprising a sliding strip support device (11, 21, 31), a sliding strip (12, 22, 32) arranged thereon and a flow guiding device (13, 23, 33),
**characterized in that**
the sliding strip support device (11, 21, 31) and the flow guiding device (13, 23, 33) are arranged relative to each other in such a manner that a channel is formed (14, 24, 34) between them, through which air (16, 26, 36) from an inflow along a diving direction (15, 25, 35) can flow.

2. The sliding contact device (10, 20) according to claim 1,
**characterized in that**
the flow guiding device (13, 23) has multiple sections.

3. The sliding contact device (10, 20) according to claim 1 or 2,
**characterized in that**
the flow guiding device (13, 23) is arranged at least in part on a side of the sliding strip support device (11, 21) that faces toward the driving direction (15, 25).

4. The sliding contact device (10, 20) according to any one of the preceding claims,
**characterized in that**
the flow guiding device (13, 23) is arranged at least in part on a side of the sliding strip support device (11, 21) that faces away from the driving direction (15, 25).

5. The sliding contact device (10) according to any one of the preceding claims,
**characterized in that**
the flow guiding device (13) is arranged at least in part on a side of the sliding strip support device (11) that faces away from the sliding strip (12).

6. The sliding contact device (10, 20) according to any one of the preceding claims,
**characterized in that**
at least one section of the flow guiding device (13, 23) is arranged on a side of the sliding strip support device (11, 21) that faces toward the driving direction (15, 25) and at least another section of the flow guiding device (13, 23) is arranged on a side of the sliding strip support device (11, 21) that faces away from the driving direction (15, 25).

7. The sliding contact device (10) according to any one of the preceding claims,
**characterized in that**
at least one section of the flow guiding device (13) is arranged on a side of the sliding strip support device (11) that faces toward the driving direction (15) and at least one other section of the flow guiding device (13) is arranged on a side of the sliding strip support device (11) that faces away from the driving direction (15) and at least yet one other section of the flow guiding device (13) is arranged on a side of the sliding strip support device (11) that faces away from the sliding strip (12).

8. The sliding contact device (10, 20, 30) according to any one of the preceding claims,
**characterized in that**
the sections of the flow guiding device (13, 23, 33) are connected to each other.

9. The sliding contact device (10, 20, 30) according to any one of the preceding claims,
**characterized in that**
the channel (14, 24, 34) is divided into multiple channel sections.

10. The sliding contact device (10, 20, 30) according to any one of the preceding claims,
**characterized in that**
a cross-section of the channel (14, 24, 34) tapers in one direction.

11. The sliding contact device (10, 20) according to any one of the preceding claims,
**characterized in that**
the flow guiding device (13, 23) is designed to be adjustable.

12. The sliding contact device (30) according to any one of the preceding claims,
**characterized in that**
the flow guiding device forms an integral part of the sliding strip support device (31).

13. The sliding contact device (30) according to claim 12,
**characterized in that**
the sliding strip support device (31) is designed as a flow guiding device in such a fashion that at least one channel (34) is formed by means of material recesses within said sliding strip support device (31) which are continuous in the driving direction (35).

14. The sliding contact device (30) according to claim 12 or 13,
**characterized in that**
the sliding contact device (30) furthermore comprises at least one more section of the flow guiding device.

## Revendications

1. Dispositif de contact glissant (10, 20, 30), en particulier pour l'alimentation électrique de véhicules par une caténaire, le dispositif de contact glissant (10, 20, 30) comprenant un dispositif de support de bande de frottement (11, 21, 31), une bande de frottement (12, 22, 32) disposée sur ce dernier et un dispositif de guidage d'écoulement (13, 23, 33),
**caractérisé en ce que**
le dispositif de support de bande de frottement (11, 21, 31) et le dispositif de guidage d'écoulement (13, 23, 33) sont disposés l'un par rapport à l'autre de telle manière qu'un canal (14, 24, 34) est formé entre eux, qui peut être traversé par l'air (16, 26, 36) d'un écoulement le long d'un sens d'avancement.

2. Dispositif de contact glissant (10, 20) selon la revendication 1,
**caractérisé en ce que**
le dispositif de guidage d'écoulement (13, 23) comporte plusieurs parties.

3. Dispositif de contact glissant (10, 20) selon la revendication 1 ou 2,
**caractérisé en ce que**
le dispositif de guidage d'écoulement (13, 23) est disposé, au moins en partie, d'un côté du dispositif de support de bande de frottement (11, 21) qui est tourné vers le sens d'avancement (15, 25).

4. Dispositif de contact glissant (10, 20) selon l'une quelconque des revendications précédentes,
**caractérisé en ce que**
le dispositif de guidage d'écoulement (13, 23) est disposé, au moins en partie, d'un côté du dispositif de support de bande de frottement (11, 21) qui est détourné du sens d'avancement (15, 25).

5. Dispositif de contact glissant (10) selon l'une quelconque des revendications précédentes,
**caractérisé en ce que**
le dispositif de guidage d'écoulement (13) est disposé, au moins en partie, d'un côté du dispositif de support de bande de frottement (11) qui est détourné de la bande de frottement (12).

6. Dispositif de contact glissant (10, 20) selon l'une quelconque des revendications précédentes,
**caractérisé en ce qu'**
au moins une partie du dispositif de guidage d'écoulement (13, 23) est disposée d'un côté du dispositif de support de bande de frottement (11, 21) qui est tourné vers le sens d'avancement (15, 25) et au moins une autre partie du dispositif de guidage d'écoulement (13, 23) est disposée d'un côté du dispositif de support de bande de frottement (11, 21) qui est détourné du sens d'avancement (15, 25).

7. Dispositif de contact glissant (10) selon l'une quelconque des revendications précédentes,
**caractérisé en ce qu'**
au moins une partie du dispositif de guidage d'écoulement (13) est disposée d'un côté du dispositif de support de bande de frottement (11) qui est tourné vers le sens d'avancement (15) et au moins une autre partie du dispositif de guidage d'écoulement (13) est disposée d'un côté du dispositif de support de bande de frottement (11) qui est détourné du sens d'avancement (15) et au moins encore une autre partie du dispositif de guidage d'écoulement (13) est disposée d'un côté du dispositif de support de bande de frottement (11) qui est détourné de la bande de frottement (12).

8. Dispositif de contact glissant (10, 20, 30) selon l'une quelconque des revendications précédentes,
**caractérisé en ce que**
les parties du dispositif de guidage d'écoulement (13, 23, 33) sont reliées entre elles.

9. Dispositif de contact glissant (10, 20, 30) selon l'une quelconque des revendications précédentes,
**caractérisé en ce que**
le canal (14, 24, 34) est divisé en plusieurs canaux partiels.

10. Dispositif de contact glissant (10, 20, 30) selon l'une quelconque des revendications précédentes,
**caractérisé en ce qu'**
une section transversale du canal (14, 24, 34) se rétrécit dans une direction.

11. Dispositif de contact glissant (10, 20) selon l'une quelconque des revendications précédentes,
**caractérisé en ce que**
le dispositif de guidage d'écoulement (13, 23) est réalisé de façon ajustable.

12. Dispositif de contact glissant (30) selon l'une quelconque des revendications précédentes,
**caractérisé en ce que**
le dispositif de guidage d'écoulement fait partie intégrante du dispositif de support de bande de frottement (31).

13. Dispositif de contact glissant (30) selon la revendication 12,
**caractérisé en ce que**
le dispositif de support de bande de frottement (31) est réalisé comme dispositif de guidage d'écoulement de telle façon qu'au moins un canal (34) est formé par des évidements de matériau continus dans le sens d'avancement (35) dans ledit dispositif de support de bande de frottement (31).

14. Dispositif de contact glissant (30) selon la revendication 12 ou 13,
**caractérisé en ce que**
le dispositif de contact glissant (30) comprend en outre au moins une autre partie du dispositif de guidage d'écoulement.
